# EUROPEAN PATENT APPLICATION

(11) **EP 4 834 444 A1**
(43) Date of publication of application: **04.11.2026**
(21) Application number: 26173537.7
(22) Date of filing: 21.04.2026
(51) Int. Cl.: A63B 45/00, A63B 41/02, A63B 43/00, A63B 41/00

(54) **METHOD FOR MANUFACTURING A BLADDER FOR A BALL**

(30) Priority: 29.04.2025 DE 102025116392
(71) Applicant: adidas AG, 91074 Herzogenaurach (DE)
(72) Inventor: NORRIDGE, Marc Anthony Simon, 91074 Herzogenaurach (DE); NÜRNBERG, Hans-Peter, 91074 Herzogenaurach (DE); DYCKMANS, Christoph, 91074 Herzogenaurach (DE)
(74) Representative: Bardehle Pagenberg Partnerschaft mbB Patentanwälte Rechtsanwälte

(57) **Abstract**

The present invention relates to a method for manufacturing a bladder for a ball, in particular a sports ball, comprising an electronic module with a protection element, wherein the method comprises the steps of: providing the electronic component on an inner wall of a mold; inserting an unformed bladder into the mold; and forming the bladder onto the inner wall of the mold and simultaneously onto the protection element such that a bladder wall is adapted to form a pocket around the electronic component.

## Description

### 1. Technical field

The present disclosure relates to a method for manufacturing a bladder for a ball, particularly a sports ball, and the ball itself. Specifically, the present disclosure relates to integrating an electronic module with a protection element into the bladder during the manufacturing process.

### 2. Description of the prior art

In the field of sports equipment manufacturing, particularly the production of sports balls, it is common to incorporate electronic components for various functionalities such as performance tracking, data collection, and user interaction. Known systems typically involve embedding electronic modules within the ball structure, which presents several challenges. These challenges include ensuring the protection of the electronic components during the manufacturing process, maintaining the integrity and performance of the ball, and achieving a seamless integration that does not affect the ball's usability or durability.

Traditional methods for embedding electronics in sports balls often involve post-manufacturing insertion, where the electronic components are added to the ball after the primary manufacturing processes are complete. This approach can lead to issues such as improper sealing, potential damage to the electronics during use, and difficulties in achieving a uniform ball surface. Additionally, the post-manufacturing insertion of electronics can complicate the assembly process, increase production costs, and result in inconsistencies in ball performance due to the added weight and altered balance.

Another approach involves embedding the electronics during the initial manufacturing stages, which can offer better integration but also introduces significant challenges. The electronic components must be protected from the high temperatures and pressures typically involved in ball manufacturing processes such as molding and curing. Without adequate protection, the components may suffer damage, leading to malfunction or reduced lifespan. Furthermore, ensuring that the electronic components are securely fixed within the ball structure without compromising the ball's elasticity and performance is a complex task.

US 2016 / 0 074 714 A1 relates to a basketball including a bladder, electronics within the bladder proximate an outer portion of the bladder, windings about the bladder, and a molded elastomeric layer about the bladder and extending over the electronics.

WO 2025 / 040 821 A1 relates to a bladder, in particular for a ball, with a patch, wherein the patch comprises a pocket, for at least partly receiving an electronic device with a button.

WO 2025 / 027 284 A1 relates to an inflatable ball containing electronic components and a method of manufacture of said inflatable ball.

WO 2022 / 053 741 A1 relates to an inflatable ball, such as a soccer ball, comprising: a cover; a bladder inside the cover an electronic module consisting of a first sub-module and at least one second sub-module electrically connected to each other with a transmission unit.

US 2017 / 0 144 031 A1 relates to an American-style football including electronics for enabling the position, speed, acceleration, deceleration, rotation and movement of the football to be accurately monitored during play.

Despite the substantial advances in the field of sports ball manufacturing, there remains a need for improved methods that allow for the efficient and reliable integration of electronic components. These methods should ensure the protection of the electronics during manufacturing, maintain the ball's performance characteristics, and provide a cost-effective and scalable solution for mass production. It is therefore a technical problem underlying the present invention to provide a method for manufacturing sports balls with integrated electronic components that at least partially overcomes the disadvantages of known systems.

### 3. Summary of the invention

It is an object of this invention to provide methods that overcome one or more of the disadvantages of known methods.

A first aspect of the invention provides a method for manufacturing a bladder for a ball, in particular a sports ball, comprising an electronic module with a protection element, wherein the method comprises the steps of: providing the electronic component on an inner wall of a mold; inserting an unformed bladder into the mold; and forming the bladder onto the inner wall of the mold and simultaneously onto the protection element such that a bladder wall is adapted to form a pocket around the electronic component.

The subject matter describes a method for manufacturing a bladder, specifically for a sports ball, which includes an electronic module that is protected by a protection element. The method involves the following steps:
Firstly, the electronic component is provided on the inner wall of a mold. This means that the electronic module is placed inside the mold in a specific position.
Secondly, an unformed bladder is inserted into the mold. This refers to placing the bladder material, which has not yet been shaped, into the mold where the electronic module is already positioned.
Thirdly, the bladder is formed onto the inner wall of the mold and simultaneously onto the protection element. This step involves shaping the bladder material so that it conforms to the inner surface of the mold and also forms around the protection element. As a result, the bladder wall is adapted to create a pocket around the electronic component. This pocket ensures that the electronic module is securely housed within the bladder, providing protection and stability.

The terms used in the aspect are as follows:
*A "bladder"* as used herein refers to the inflatable part of the ball.

An *"electronic module"* as used herein is a component that may include sensors or other electronic devices.

A *"protection element"* as used herein is a feature designed to safeguard the electronic module.

A *"mold"* as used herein is a form used to shape the bladder.

A *"bladder wall"* as used herein is the outer surface of the bladder.

A *"pocket"* as used herein is a formed space within the bladder wall that houses the electronic module.

The advantages of this method include ensuring that the electronic module is securely integrated into the bladder of the ball, providing protection to the electronic components, and maintaining the structural integrity of the ball. This method allows for the efficient and precise manufacturing of sports balls with embedded electronics, enhancing their functionality and durability.

In some embodiments, the electronic component may be arranged after the step of forming the bladder on an outer side of the bladder wall and fixed inside the pocket.

Here, the electronic component is positioned on the outer side of the bladder wall and is fixed inside a pocket that is formed around it. This feature brings a new aspect to the manufacturing process by ensuring that the electronic component is securely housed within a designated pocket, which is created simultaneously as the bladder is formed. This arrangement provides a protective enclosure for the electronic component, potentially enhancing its durability and functionality by shielding it from environmental factors that could affect its performance. The pocket serves as a structural feature that not only accommodates the electronic component but also ensures its stability and protection during the use of the ball. By being fixed inside the pocket, the electronic component is less likely to shift or become dislodged, which could otherwise lead to malfunction or damage.

In some embodiments, a shape of the pocket may be adapted to follow a shape of the electronic component after the step of forming the bladder.

This implementation introduces a new feature where the shape of the pocket formed around the electronic component is specifically adapted to follow the shape of the electronic component after the step of forming the bladder onto the inner wall of the mold and simultaneously onto the protection element. This adaptation ensures that the bladder wall conforms precisely to the contours of the electronic component, thereby creating a snug and secure fit. The specific mechanism of communication between components here involves the interaction between the bladder material and the electronic component during the molding process. By ensuring that the pocket's shape matches the electronic component's shape, the method enhances the protection and stability of the electronic component within the bladder. This feature brings several advantages, such as reducing the likelihood of movement or displacement of the electronic component within the bladder, which could otherwise lead to potential damage or malfunction. Additionally, the precise fit can help in maintaining the overall structural integrity of the bladder and the ball, ensuring that the electronic component remains securely embedded within the bladder during use. This is particularly important for sports balls, which are subject to significant physical stress and impact during play.

In some embodiments, the step of forming the bladder is performed by using heat and/or an outward-directed force, and wherein the protection element is adapted to protect the electronic module from the heat and/or the outward directed force used in the step of forming the bladder.

This implementation introduces specific mechanisms for performing the step of forming the bladder onto the inner wall of the mold and simultaneously onto the protection element. This step is achieved by using heat and/or an outward-directed force. The implementation also specifies that the protection element is adapted to protect the electronic module from the heat and/or the outward-directed force employed during this step. The adaptation of the protection element to safeguard the electronic module from these specific conditions ensures that the electronic module remains undamaged during the manufacturing process. This protective adaptation is crucial as it highlights the dual function of the protection element, not only in integrating the electronic module into the bladder but also in preserving its integrity against potentially harmful manufacturing conditions. By specifying the use of heat and/or an outward-directed force, the implementation delineates the operational parameters within which the method operates, thereby providing a more comprehensive and robust description of the manufacturing process. This level of detail enhances the precision of the implementation, ensuring that the method is clearly defined, and that the protection element's role is explicitly stated. The adaptation of the protection element to counteract the effects of heat and/or outward-directed force underscores the importance of maintaining the functionality and reliability of the electronic module, which is integral to the overall performance of the bladder and, consequently, the ball. Thus, the implementation not only elaborates on the method of forming the bladder but also emphasizes the protective measures incorporated to safeguard the electronic module, thereby contributing to the durability and effectiveness of the final product.

In some embodiments, the protection element may be a casing of the electronic component adapted to withstanding the heat and/or the outward-directed force used in the step of forming the bladder.

This implementation introduces a specific enhancement to the method for manufacturing a bladder for a ball, particularly focusing on the protection element associated with the electronic module. In this context, the protection element is identified as a casing for the electronic component. This casing is specifically adapted to withstand the heat and/or the outward-directed force that is applied during the forming of the bladder onto the inner wall of the mold. The introduction of this casing as a protection element brings several new features and mechanisms of communication between components. The primary function of the casing is to act as a protective barrier for the electronic component, ensuring its integrity and functionality are maintained during the manufacturing process. This is crucial because the manufacturing process involves the application of heat and pressure, which could potentially damage sensitive electronic components. By adapting the casing to withstand these conditions, the electronic component is shielded from adverse effects, thereby enhancing the durability and reliability of the final product. The communication between the components, in this case, involves the interaction between the bladder material and the casing during the forming process. The bladder material must form around the casing in such a way that it creates a pocket for the electronic component, ensuring it is securely housed within the bladder. This interaction is facilitated by the design of the casing, which must be compatible with the bladder material to allow for proper adhesion and formation. The new feature of the casing being able to withstand heat and outward-directed force ensures that the electronic component remains unaffected by the manufacturing conditions, thereby maintaining its operational capabilities. This is particularly important for sports balls, where the electronic component may be used for tracking or monitoring purposes, and any damage could compromise its functionality. Overall, the introduction of a heat and force-resistant casing as a protection element enhances the robustness of the electronic module within the bladder, ensuring that the manufacturing process does not impair the performance of the electronic component, thereby contributing to the overall quality and reliability of the sports ball.

In some embodiments, the electronic component may be removably attached in the step of forming the bladder.

This specific mechanism of communication between components allows for the electronic component to be detached and reattached as needed, providing flexibility in the manufacturing process. The removable attachment feature brings several advantages to the manufacturing method. It facilitates easier maintenance and replacement of the electronic component, ensuring that if the component fails or requires an upgrade, it can be easily removed and replaced without the need to discard the entire bladder.

In some embodiments, the electronic component may be provided by a means for mounting, preferably a pin, of the mold.

This feature brings a new aspect to the method of manufacturing a bladder for a ball, particularly a sports ball, by specifying how the electronic component is positioned and secured during the manufacturing process. The use of a means for mounting, such as a pin, ensures that the electronic component is accurately placed on the inner wall of the mold before the unformed bladder is inserted. This precise placement is crucial for the subsequent step where the bladder is formed onto the inner wall of the mold and simultaneously onto the protection element, resulting in a bladder wall that forms a pocket around the electronic component. The introduction of this mounting mechanism enhances the reliability and consistency of the manufacturing process by providing a stable and repeatable method for positioning the electronic component. This not only improves the structural integrity of the bladder but also ensures that the electronic component is securely encapsulated within the bladder, thereby protecting it from potential damage during use. Additionally, the use of a pin or similar mounting means simplifies the manufacturing process by reducing the need for additional alignment steps or complex positioning equipment. This can lead to increased efficiency and reduced production costs. The implementation, therefore, adds a significant improvement to the method by detailing a practical and effective way to integrate the electronic component into the bladder, ensuring both precision and protection.

In some embodiments, the unformed bladder may comprise a deflated bladder, a bladder preforms or a raw bladder material.

Each of these embodiments with specific further features and their advantages will be explained in the following.

The implementation of the deflated bladder introduces a specific mechanism for forming the bladder by utilizing a deflated bladder and incorporating the steps of injecting gas into the deflated bladder and applying heat to it. This method of manufacturing a bladder for a ball, particularly a sports ball, involves an electronic module with a protection element. The new feature brought by this implementation is the use of a deflated bladder, which is then inflated by injecting gas. This process allows for a more controlled and precise formation of the bladder around the electronic component. The application of heat to the deflated bladder aids in molding the bladder material, ensuring that it conforms accurately to the inner wall of the mold and the protection element. This results in the bladder wall forming a pocket around the electronic component. The combination of gas injection and heat application ensures that the bladder material is sufficiently pliable and can be shaped effectively, enhancing the integration of the electronic component within the bladder. This method provides a more efficient and reliable way to manufacture bladders with embedded electronic components, ensuring that the components are securely housed within the bladder and protected from external forces. The use of a deflated bladder that is subsequently inflated allows for better control over the thickness and uniformity of the bladder wall, which is critical for the performance and durability of the ball. The injection of gas and the application of heat work synergistically to achieve the desired bladder shape and structure, ensuring that the electronic module is properly encapsulated and protected. This method also simplifies the manufacturing process by reducing the number of steps required to form the bladder and integrate the electronic component, potentially lowering production costs and improving overall product quality. The introduction of these specific mechanisms of communication between components, namely the deflated bladder, gas injection, and heat application, enhances the functionality and reliability of the manufactured bladder, making it well-suited for use in sports balls with embedded electronic modules.

In some embodiments, the deflated bladder may be attached to a gas injection means, preferably a valve.

This implementation introduces a specific mechanism of communication between components by specifying that the deflated bladder is attached to a gas injection means, preferably a valve. This new feature enhances the method for manufacturing a bladder for a ball by providing a more precise and controlled means of inflating the bladder during the manufacturing process. The inclusion of a gas injection means, such as a valve, allows for the regulation of gas flow into the bladder, ensuring that the bladder is properly inflated to the desired pressure and shape. This feature is particularly important in the context of forming the bladder onto the inner wall of the mold and simultaneously onto the protection element, as it ensures that the bladder wall conforms accurately to the mold and the electronic component. By attaching the deflated bladder to a gas injection means, the method facilitates the creation of a pocket around the electronic component, which is essential for protecting the electronic module within the ball. The use of a valve as the preferred gas injection means offers additional advantages, such as ease of use, reliability, and the ability to maintain a consistent inflation pressure. This feature also contributes to the overall durability and performance of the bladder, as it ensures that the bladder is formed with uniform thickness and strength. Furthermore, the attachment of the deflated bladder to a gas injection means can streamline the manufacturing process by reducing the need for manual intervention and minimizing the risk of errors. This enhancement aligns with the overall goal of the method, which is to produce a high-quality bladder that incorporates an electronic module with a protection element, thereby improving the functionality and longevity of the ball. In summary, the implementation adds a critical feature that improves the precision, efficiency, and reliability of the bladder manufacturing process by incorporating a gas injection means, preferably a valve, to inflate the bladder during its formation.

In some embodiments, the deflated bladder may comprise elastomers, preferably rubber, more preferably butyl rubber.

This material specification introduces several new features and mechanisms of communication between components. The use of elastomers, particularly rubber, enhances the flexibility and durability of the bladder, which is crucial for maintaining the integrity of the electronic module during the manufacturing process and subsequent use of the ball. Elastomers are known for their elastic properties, allowing the bladder to stretch and conform to the mold and the protection element without compromising the structural integrity of the electronic component. The preference for rubber, and more specifically butyl rubber, further refines these properties. Butyl rubber is known for its excellent air retention capabilities, which is particularly advantageous for sports balls that require consistent inflation levels. This material choice ensures that the bladder can maintain its shape and functionality over time, even under the stress of repeated use. Additionally, butyl rubber's resistance to heat and chemical degradation provides an added layer of protection for the electronic module, ensuring that it remains securely housed within the pocket formed by the bladder. The specific choice of butyl rubber also facilitates a more seamless integration of the electronic component with the bladder, as the material's properties allow for a more precise and secure formation of the pocket around the electronic module. This enhances the overall reliability and performance of the ball, as the electronic component is less likely to be dislodged or damaged during use. In summary, the implementation's specification of elastomers, particularly butyl rubber, as the material for the deflated bladder introduces significant enhancements in terms of flexibility, durability, air retention, and protection for the electronic module, thereby optimizing the method for manufacturing a bladder for a ball.

In some embodiments, the bladder preform, or the raw bladder material may be used, and the step of forming the bladder comprises a blow molding process for forming the bladder.

The implementation introduces a specific mechanism for forming the bladder, which involves the use of a bladder preform or raw bladder material in conjunction with a blow molding process. This method builds upon the aspect by specifying the material state of the bladder before the forming process and the particular technique used to shape it. The blow molding process is a manufacturing method in which air pressure is used to inflate soft plastic into a mold cavity, thereby forming the desired shape. By employing this process, the method ensures that the bladder wall is accurately formed around the electronic component and its protection element, creating a pocket that securely houses the electronic module. This technique enhances the precision and consistency of the bladder formation, which is critical for maintaining the integrity and functionality of the electronic component within the sports ball. Additionally, the use of a bladder preform or raw bladder material allows for greater control over the material properties and thickness of the bladder wall, which can be tailored to meet specific performance requirements. This feature brings added versatility and reliability to the manufacturing process, ensuring that the final product meets stringent quality standards. The integration of the blow molding process into the method also suggests potential improvements in production efficiency and scalability, as this technique is well-suited for high-volume manufacturing. Overall, the implementation refines the method by detailing the use of a specific forming process and material state, thereby enhancing the practicality and effectiveness of the bladder manufacturing process for sports balls containing electronic modules.

In some embodiments, the bladder preform may be used.

This implementation introduces a specific mechanism for forming the bladder by specifying that a bladder preform is used and that the forming process involves an injection blow molding technique. This method of injection blow molding entails injecting a molten material into a mold to create a preform, which is then blown into its final shape within the mold. This process allows for precise control over the thickness and uniformity of the bladder wall, ensuring that the bladder forms accurately around the electronic component and its protection element. The use of a bladder preform in conjunction with injection blow molding enhances the manufacturing process by providing a more consistent and reliable method for integrating the electronic module into the bladder. This technique also potentially improves the durability and performance of the bladder by ensuring a secure and well-formed pocket around the electronic component. The new feature of utilizing an injection blow molding process brings several advantages, including improved material distribution, enhanced structural integrity, and the ability to produce complex shapes with high precision. This method is particularly beneficial for manufacturing sports balls, where the uniformity and strength of the bladder are critical for performance. By specifying the use of a bladder preform and injection blow molding, the implementation adds a layer of specificity to the manufacturing method, highlighting a sophisticated technique that enhances the overall quality and functionality of the bladder. This implementation builds upon the aspect by detailing a particular approach to forming the bladder, thereby providing a clearer and more detailed description of the manufacturing process. The inclusion of this specific molding process underscores the importance of precision and reliability in the production of bladders for sports balls, ensuring that the electronic component is securely and effectively integrated into the final product.

In some embodiments, the bladder preform may be preheated.

In the context of the aspect, the method involves providing the electronic component on an inner wall of a mold, inserting an unformed bladder into the mold, and forming the bladder onto the inner wall of the mold and simultaneously onto the protection element, thereby adapting the bladder wall to form a pocket around the electronic component. The addition of preheating the bladder preform serves as a specific mechanism to enhance the manufacturing process. Preheating can facilitate the forming process by increasing the pliability and malleability of the bladder material, allowing it to more easily conform to the contours of the mold and the protection element. This can lead to a more precise and secure encapsulation of the electronic component within the bladder, ensuring that the pocket formed around the electronic component is uniform and robust.

In some embodiments, the raw bladder material may be used, and the step of forming the bladder comprises an extrusion blow molding process for forming the bladder.

This method involves the extrusion of a molten tube of raw bladder material, which is then enclosed within the mold. Air is blown into the tube, causing it to expand and conform to the shape of the mold, including the inner wall and the protection element housing the electronic component. The extrusion blow molding process ensures that the bladder wall forms a pocket around the electronic component, thereby integrating the electronic module seamlessly into the bladder. This method provides a more efficient and precise way of manufacturing the bladder, as it allows for the simultaneous formation of the bladder and the encapsulation of the electronic component within a protective pocket. The use of raw bladder material in conjunction with the extrusion blow molding process enhances the structural integrity and durability of the bladder, ensuring that the electronic component is securely housed and protected from external forces. This process also allows for greater control over the thickness and uniformity of the bladder wall, which can be critical for maintaining the performance and longevity of the ball. By specifying the use of raw bladder material and the extrusion blow molding process, the implementation adds a layer of specificity and technical detail to the method, highlighting the advantages of this manufacturing technique in producing a high-quality bladder with an integrated electronic component. This approach not only streamlines the manufacturing process but also improves the overall quality and reliability of the final product.

In some embodiments, the inserted raw bladder material may be a parison extruded before forming the parison by utilizing a pressure of an injected gas.

The new feature brought by this implementation is the specification of the raw bladder material being a parison that is extruded before the forming process. This parison is then formed by utilizing the pressure of an injected gas. The introduction of the parison as the raw bladder material and the use of gas pressure for forming the parison add a layer of specificity to the manufacturing process. The parison, being an extruded material, implies a preliminary shaping or preparation stage before it is inserted into the mold. This preparation can contribute to the uniformity and quality of the final bladder. The utilization of gas pressure for forming the parison indicates a blow molding process, which is a common technique in manufacturing hollow objects. This method ensures that the bladder material conforms closely to the inner contours of the mold, including the protection element of the electronic module. The gas pressure aids in expanding the parison against the mold walls, ensuring that the bladder wall forms a pocket around the electronic component as described in the aspect. This specific mechanism of using an extruded parison and gas pressure for forming enhances the precision and consistency of the bladder formation, potentially improving the integration of the electronic module within the bladder. This implementation, therefore, refines the manufacturing method by detailing the type of raw material used and the forming technique, which can lead to improved product performance and reliability.

In some embodiments, the bladder preform, or the raw bladder material may comprise a thermoplastic polymer, preferably a thermoplastic elastomer.

The inclusion of a thermoplastic polymer as a material choice suggests a focus on the material properties that can influence the manufacturing process and the final characteristics of the bladder. Thermoplastic polymers are known for their ability to be repeatedly softened by heat and hardened by cooling, which can be advantageous in molding processes. This property allows for the material to be easily shaped and reshaped, which is particularly beneficial in forming the bladder onto the inner wall of the mold and around the protection element. The preference for a thermoplastic elastomer further refines this choice by highlighting a subclass of thermoplastic polymers that exhibit both thermoplastic and elastomeric properties. Thermoplastic elastomers combine the elasticity of rubber with the recyclability and processing advantages of plastics. This means that the bladder can be both flexible and durable, which is crucial for a sports ball that needs to withstand repeated impacts and maintain its shape. The selection of a thermoplastic elastomer could also imply enhanced performance characteristics such as improved resistance to wear and tear, better flexibility at varying temperatures, and potentially lighter weight, all of which are desirable in the context of sports equipment. Additionally, the use of thermoplastic elastomers might facilitate the integration of the electronic module by providing a more adaptable and resilient environment for the electronic components, thereby enhancing their protection and longevity. This material choice could also impact the manufacturing efficiency, potentially allowing for faster production cycles and reduced material waste due to the recyclable nature of thermoplastic elastomers. Overall, this implementation enriches the method by specifying a material that not only supports the functional requirements of the bladder but also aligns with manufacturing efficiencies and product performance enhancements.

In some embodiments, a temperature in the range of 80°C to 220°C, preferably 120°C to 200°C, more preferably 140°C to 180°C may be applied.

The specified temperature range is between 80°C to 220°C, with a preferred range of 120°C to 200°C, and a more preferred range of 140°C to 180°C. This new feature brings a precise control over the thermal conditions during the manufacturing process, which can significantly impact the quality and characteristics of the bladder. By specifying the temperature range, the implementation ensures that the material properties of the bladder are optimized for forming around the electronic component and the protection element. The controlled temperature range likely aids in achieving the desired mechanical properties, such as elasticity, durability, and the ability to form a secure pocket around the electronic component. Additionally, maintaining the temperature within this range can help in preventing defects that might arise from improper thermal conditions, such as warping, incomplete formation, or weak bonding between the bladder material and the electronic component. This feature also implies a level of precision in the manufacturing process, which can lead to consistent and reliable production outcomes. The inclusion of this temperature range in the implementation highlights the importance of thermal management in the method, ensuring that the bladder is formed correctly and functions as intended when integrated into the ball. This specific temperature control can also affect the curing time and the overall efficiency of the manufacturing process, potentially reducing production time and costs while maintaining high-quality standards. The implementation, therefore, adds a critical aspect of thermal regulation to the method, enhancing the overall robustness and effectiveness of the bladder manufacturing process.

In some embodiments, the step of forming the bladder comprises a rotational molding process.

By incorporating a rotational molding process, the method ensures a more uniform distribution of the material forming the bladder, which can lead to a more consistent and durable final product. Rotational molding, also known as roto-molding, involves rotating the mold around two perpendicular axes, allowing the material to coat the inner surfaces of the mold evenly. This process can be particularly beneficial in ensuring that the bladder wall forms a pocket around the electronic component with precision and uniformity. The rotational molding process also allows for the creation of complex shapes and can accommodate the integration of the electronic module and its protection element seamlessly into the bladder structure.

In some embodiments, a softened material or a powder material may be inserted in the step of forming the bladder and the mold rotates around at least two axes during step.

This embodiment enhances the manufacturing process by allowing for a more uniform and consistent formation of the bladder around the electronic module and its protective element. The introduction of a softened or powder material implies a change in the state of the bladder material, facilitating its adaptation to the shape of the mold and the electronic component. This is crucial in ensuring that the bladder wall forms a precise pocket around the electronic component, as described in the aspect. The rotation of the mold around at least two axes is a significant addition to the method, as it ensures even distribution of the bladder material. This rotational movement is essential for achieving a uniform thickness and consistency in the bladder wall, which is critical for maintaining the integrity and functionality of the bladder in a sports ball. The dual-axis rotation likely enhances the coverage and adhesion of the bladder material to the electronic module and its protective element, thereby improving the durability and performance of the final product. This feature also suggests an improvement in the efficiency of the manufacturing process, potentially reducing the time and resources required to achieve the desired bladder configuration. By incorporating these specific mechanisms, the implementation adds a layer of sophistication to the manufacturing method, addressing potential challenges related to material distribution and component integration within the bladder. The introduction of these features not only refines the process but also potentially enhances the quality and reliability of the sports ball, ensuring that the electronic module is securely housed within the bladder. This advancement in the method highlights a thoughtful consideration of the complexities involved in manufacturing a bladder with integrated electronic components, ultimately contributing to the development of more advanced and robust sports equipment.

In some embodiments, the unformed bladder may comprise a thermoplastic polymer, preferably a thermoplastic elastomer.

By specifying that the unformed bladder is made of a thermoplastic polymer, the implementation highlights the material's properties, such as its ability to be easily molded and reshaped upon heating, which is crucial for the step of forming the bladder onto the inner wall of the mold and around the protection element. The preference for a thermoplastic elastomer further refines the material choice, emphasizing the need for elasticity and flexibility in the bladder. Thermoplastic elastomers combine the properties of rubber with the processing advantages of plastics, offering durability, resilience, and the ability to withstand repeated deformation. These characteristics are essential for a sports ball bladder, which must endure significant stress and maintain its shape and functionality over time. The use of a thermoplastic elastomer ensures that the bladder can form a secure and protective pocket around the electronic component, enhancing the overall performance and longevity of the ball. Additionally, the material's compatibility with the molding process ensures a seamless integration of the electronic module, reducing the risk of damage or malfunction. This material choice also facilitates the manufacturing process, allowing for efficient production and consistent quality control. By specifying the use of a thermoplastic polymer, particularly a thermoplastic elastomer, the implementation adds a layer of specificity and technical detail that enhances the method's effectiveness and reliability in producing a high-quality bladder for a sports ball. This material selection is critical for achieving the desired balance of strength, flexibility, and durability, ensuring that the bladder can perform its intended function while protecting the embedded electronic component.

In some embodiments, the protection element may comprise at least one of the following: rubber, polycarbonate/Acrylonitrile Butadiene Styrene, PC/ABS, polycarbonate, PC, polyphenylene sulfide, PPS, polyethylene terephthalate, PET, polyamide, PA, thermoplastic polyurethane, TPU, or polyamide-imide, PAI.

These materials are selected for their properties that contribute to the durability and functionality of the protection element. Rubber, for instance, offers flexibility and impact resistance, making it suitable for absorbing shocks and protecting the electronic component. PC/ABS combines the strength and heat resistance of polycarbonate with the flexibility and processability of ABS, providing a balanced material that can withstand mechanical stresses and environmental factors. Pure polycarbonate (PC) is known for its high impact resistance and transparency, which can be beneficial in applications requiring visibility of the electronic component. Polyphenylene sulfide (PPS) is a high-performance thermoplastic known for its chemical resistance and thermal stability, making it suitable for harsh environments. Polyethylene terephthalate (PET) is a durable and lightweight material with good barrier properties, often used in packaging and protective applications. Polyamide (PA), commonly known as nylon, offers excellent mechanical properties, including high tensile strength and abrasion resistance. Thermoplastic polyurethane (TPU) is a versatile material known for its elasticity, transparency, and resistance to oil, grease, and abrasion, making it ideal for protective applications that require flexibility and durability. Polyamide-imide (PAI) is a high-performance polymer with exceptional mechanical strength, thermal stability, and chemical resistance, suitable for demanding applications. By specifying these materials, the implementation enhances the method by providing options for the protection element that can be tailored to different performance requirements and environmental conditions, ensuring the electronic component within the bladder is adequately protected during use. This flexibility in material selection allows for optimization of the protection element based on the specific needs of the ball and its intended use, thereby improving the overall reliability and longevity of the electronic module within the sports ball.

In some embodiments, the means for mounting, preferably the pin, may be adapted to hold the electronic module in place in that the means for mounting interlocks with a socket in the protection element.

The means for mounting achieves this by interlocking with a socket in the protection element. This interlocking feature ensures that the electronic module remains securely positioned during the manufacturing process and within the final product. The aspect outlines a method for manufacturing a bladder that includes an electronic module with a protection element, and involves steps such as providing the electronic component on an inner wall of a mold, inserting an unformed bladder into the mold, and forming the bladder onto the inner wall and the protection element to create a pocket around the electronic component. The implementation builds upon this by specifying how the electronic module is held in place, which is crucial for maintaining the integrity and functionality of the electronic component within the bladder. The interlocking mechanism between the means for mounting and the socket in the protection element provides a robust and reliable method for securing the electronic module, which is essential for ensuring that the electronic component remains properly positioned and protected throughout the manufacturing process and during the use of the ball. This feature enhances the overall durability and performance of the ball by preventing displacement or damage to the electronic module.

In some embodiments, a temperature in the range of 140°C to 260°C, preferably 160°C to 240°C, more preferably 180°C to 220°C may be applied.

The introduction of this temperature range brings several new features and mechanisms of communication between components. Firstly, the specification of the temperature range ensures that the material of the bladder is adequately formed and bonded around the electronic component and its protection element. This precise temperature control is crucial for achieving the desired mechanical properties of the bladder, such as flexibility, durability, and the ability to securely encapsulate the electronic module. By applying a temperature within the specified range, the method ensures that the bladder material reaches an optimal state of malleability, allowing it to conform closely to the inner wall of the mold and the protection element. This results in a more uniform and reliable pocket formation around the electronic component, enhancing the overall integrity and performance of the bladder. Additionally, the specified temperature range likely corresponds to the thermal properties of the materials used in the bladder and the protection element, ensuring that they do not degrade or lose their functional properties during the manufacturing process. The inclusion of preferred and more preferred temperature ranges further refines the method, providing guidance for achieving the best possible results. This level of detail in the temperature specification indicates a thorough understanding of the material science involved and highlights the importance of precise thermal management in the manufacturing process. Overall, the new feature of a specified temperature range enhances the method by ensuring consistent and high-quality formation of the bladder, ultimately leading to a more reliable and durable sports ball with an integrated electronic module.

In some embodiments, the step of forming the bladder is performed by using heat, wherein the protection element is adapted to protect the electronic module from the heat, such that a temperature of a battery of the electronic module does not exceed 100°C, preferably 90°C, more preferably 80°C.

This protection ensures that the temperature of the battery within the electronic module does not exceed certain thresholds, specifically not exceeding 100°C, with a preference for not exceeding 90°C, and more preferably not exceeding 80°C. This addition brings a significant enhancement to the method by addressing the potential risk of heat damage to the electronic module, particularly its battery, during the manufacturing process. By specifying the temperature limits, the implementation ensures that the electronic module remains functional and safe, thereby improving the reliability and durability of the final product. The protection element's role is crucial in maintaining the integrity of the electronic module while allowing the bladder to be formed effectively around it. This feature is particularly important in applications where the electronic module is integral to the ball's functionality, such as in smart sports balls that track performance metrics. The implementation, therefore, not only outlines a method for incorporating an electronic module into a bladder but also ensures that the module is protected from the potentially damaging effects of the heat used in the manufacturing process. This careful consideration of the thermal protection of the electronic components highlights an advanced approach to manufacturing that balances the need for robust physical integration with the preservation of electronic functionality.

In some embodiments, the following steps may be included: closing the mold prior to step; opening the mold after step; and removing the formed bladder.

The implementation introduces additional procedural steps to the method of manufacturing a bladder for a ball, which involves an electronic module with a protection element. The specific mechanisms of communication between components in this implementation are centered around the interaction between the mold and the bladder during the manufacturing process. The implementation specifies the sequence of closing the mold prior to forming the bladder, opening the mold after the bladder has been formed, and subsequently removing the formed bladder. These steps are crucial as they ensure that the bladder is properly shaped and that the electronic component is securely encapsulated within the bladder's pocket. The closing of the mold ensures that the unformed bladder is held in place and that the forming process occurs under controlled conditions, which is critical for achieving the desired shape and structural integrity. The opening of the mold after the forming step allows for the release of the formed bladder without causing damage to the newly created pocket around the electronic component. Finally, the removal of the formed bladder is an essential step to transition from the manufacturing phase to the next stage of ball assembly or quality control. The new features brought by this implementation enhance the method by providing a clear and structured approach to handling the mold during the bladder forming process. This ensures that the electronic component is adequately protected, and that the bladder maintains its intended shape and function. By specifying the sequence of closing, opening, and removing, the implementation adds a layer of precision and reliability to the manufacturing process, which is particularly important in applications where the electronic component must be securely housed within the bladder. This structured approach also potentially reduces the risk of defects or inconsistencies in the bladder, thereby improving the overall quality and performance of the final product.

Furthermore, these steps may contribute to the efficiency of the manufacturing process by streamlining the handling of the mold and the bladder, which can be beneficial in a production environment where time and resource management are critical. Overall, the implementation refines the method by integrating these procedural steps, thereby enhancing the functionality and reliability of the manufactured bladder.

A second aspect of the invention provides a method for manufacturing a ball, in particular a sports ball, comprising the step of assembling the formed bladder manufactured according to one of the preceding embodiments, into an outer shell of a ball while the formed bladder is again in a deflated state.

In this context, the "*formed bladder"* indicates that the bladder has already been shaped and constructed as per a specific manufacturing process detailed in earlier implementations.

The *"outer shell"* is the exterior covering of the ball, which provides durability, texture, and the appropriate surface for the sport for which the ball is intended.

The advantage of assembling the bladder into the outer shell while it is deflated is that it simplifies the insertion process. A deflated bladder is more flexible and easier to handle, allowing it to be positioned correctly within the outer shell without causing damage or misalignment. Once the bladder is inside the outer shell, it can then be inflated to the desired pressure, ensuring a snug fit and optimal performance of the ball. This method enhances the efficiency of the manufacturing process and ensures the quality and consistency of the final product.

A third aspect of the invention provides a ball, in particular a sports ball, comprising a bladder with an electronic module having a protection element, wherein the protection element is adapted to protect the electronic module from heat and/or an outward-directed force used during forming the bladder.

The subject matter described involves a ball, specifically designed for sports purposes, which includes a bladder. The bladder is a flexible, inflatable component that forms the core of the ball, allowing it to maintain its shape and provide the necessary bounce and feel for sports activities. Within this bladder, an electronic module is integrated. This electronic module could serve various functions, such as tracking performance metrics or providing feedback to the user.

To ensure the electronic module remains functional and undamaged, a protection element is incorporated. This protection element is specifically designed to shield the electronic module from potential damage caused by heat or outward-directed forces that may occur during the process of forming the bladder. The forming process could involve molding or other techniques that apply heat and pressure to shape the bladder. The protection element acts as a barrier, preventing these external factors from adversely affecting the electronic module.

The advantage of this design is that it allows for the integration of advanced electronic features within a sports ball without compromising the durability or performance of the electronic components. By safeguarding the electronic module, the ball can maintain its intended functionality and provide enhanced features to the user, such as data collection or interactive capabilities, without the risk of damage during manufacturing.

In some embodiments, the electronic module may be arranged in a pocket of the bladder and the pocket is adapted to fix the electronic module. Here, the same advantages apply as explained before.

In some embodiments, the pocket may extend inward of the bladder and may be adapted to provide sufficient pressure onto lateral surfaces of the protection element to fix the protection element even when the bladder is deflated.

The implementation introduces a specific mechanism of communication between the components of the ball, particularly focusing on the interaction between the pocket and the protection element within the bladder. The pocket is designed to extend inwardly of the bladder, which is a critical feature that ensures the protection element is securely positioned. This inward extension of the pocket is adapted to apply sufficient pressure onto the lateral surfaces of the protection element. This pressure is crucial as it serves to fix the protection element in place, even in scenarios where the bladder is deflated. The new feature brought by this implementation is the enhanced stability and security of the protection element within the bladder, irrespective of the bladder's inflation state. This is particularly important for maintaining the integrity and functionality of the electronic module housed within the protection element. By ensuring that the protection element remains fixed even when the bladder is deflated, the design mitigates the risk of displacement or damage to the electronic module during various stages of use or handling of the ball. This feature enhances the durability and reliability of the ball, especially in sports applications where the ball may be subjected to varying pressures and forces. The inward extension of the pocket and the resultant pressure on the lateral surfaces of the protection element provide a robust solution to potential issues related to the movement or instability of the electronic module. This implementation, therefore, adds a significant improvement to the overall design by addressing the need for a secure and stable housing for the electronic module within the bladder, ensuring consistent performance and protection under different conditions.

In some embodiments, the bladder may comprise butyl rubber and/or a thermoplastic polymer, preferably a thermoplastic elastomer.

This introduces specific materials that the bladder can be made from, highlighting the use of butyl rubber and thermoplastic polymers, which include thermoplastic elastomers. Butyl rubber is known for its excellent impermeability to gases and resistance to heat, chemicals, and ozone, making it an ideal material for maintaining the integrity and durability of the bladder under various conditions. Thermoplastic polymers, particularly thermoplastic elastomers, offer a unique combination of rubber-like flexibility and the processability of plastics. These materials can be repeatedly melted and reshaped, providing significant advantages in manufacturing and recycling. The inclusion of these materials in the bladder enhances the overall performance of the ball by ensuring that it remains durable and retains its shape and functionality over time. Additionally, the use of thermoplastic elastomers can contribute to the ball's resilience and ability to withstand the forces exerted during play, as well as the heat generated during the forming process of the bladder. This implementation builds upon the aspect by specifying the materials that can be used to construct the bladder, thereby offering a more detailed and robust solution for protecting the electronic module within the ball. The selection of butyl rubber and thermoplastic elastomers aligns with the need for materials that can endure the physical and thermal stresses involved in the manufacturing process and the subsequent use of the ball in sports or other activities. By incorporating these materials, the ball is better equipped to safeguard the electronic module from potential damage caused by heat and outward-directed forces, ensuring the longevity and reliability of the electronic components housed within the bladder. This implementation thus enhances the functionality and durability of the ball, providing a more comprehensive approach to protecting the electronic module while maintaining the desired performance characteristics of the sports ball.

In some embodiments, the protection element may comprise at least one of the following: polycarbonate/Acrylonitrile Butadiene Styrene, PC/ABS, polycarbonate, PC, polyphenylene sulfide, PPS, polyethylene terephthalate, PET, polyamide, PA, or polyamide-imide, PAI.

The implementation introduces specific materials for the protection element of the ball, which is designed to safeguard the electronic module from heat and/or outward-directed forces during the formation of the bladder. The communication between components in this context refers to the interaction between the protection element and the electronic module, as well as the interaction between the protection element and the external environment. The protection element acts as a barrier, ensuring that the electronic module remains unharmed by external conditions that could potentially damage it. By specifying materials such as polycarbonate/Acrylonitrile Butadiene Styrene (PC/ABS), polycarbonate (PC), polyphenylene sulfide (PPS), polyethylene terephthalate (PET), polyamide (PA), or polyamide-imide (PAI), the implementation highlights the versatility and adaptability of the protection element in providing robust protection. Each of these materials brings unique properties to the protection element. For instance, polycarbonate is known for its high impact resistance and thermal stability, making it suitable for protecting the electronic module from both mechanical forces and heat. Acrylonitrile Butadiene Styrene, when combined with polycarbonate, enhances the toughness and durability of the protection element, providing a balanced combination of strength and flexibility. Polyphenylene sulfide is recognized for its chemical resistance and dimensional stability at high temperatures, which can be crucial in maintaining the integrity of the electronic module under thermal stress. Polyethylene terephthalate offers excellent thermal and dimensional stability, as well as resistance to moisture, which can be beneficial in maintaining the functionality of the electronic module in varying environmental conditions. Polyamide and polyamide-imide are known for their strength, toughness, and resistance to wear and heat, making them suitable for applications where the protection element is subjected to rigorous conditions. By incorporating these materials, the protection element not only ensures the safety of the electronic module but also enhances the overall durability and performance of the ball. The selection of these materials allows for customization based on specific requirements, whether the focus is on thermal protection, impact resistance, or chemical stability, thereby broadening the applicability of the ball in various sports and environmental conditions. This implementation, therefore, expands the scope of the aspect by detailing the material composition of the protection element, thereby offering a comprehensive solution to the challenges posed by the formation process of the bladder and the operational environment of the ball.

### 4. Short description of the figures

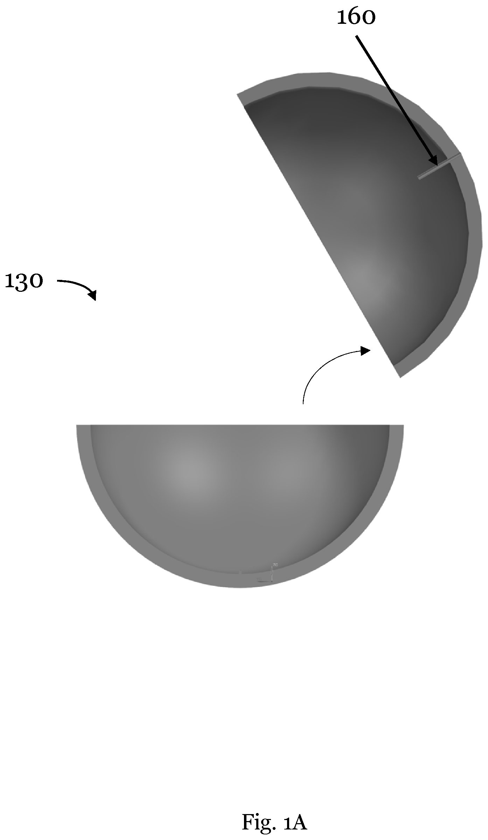

Figure 1A: shows an embodiment of a mold.

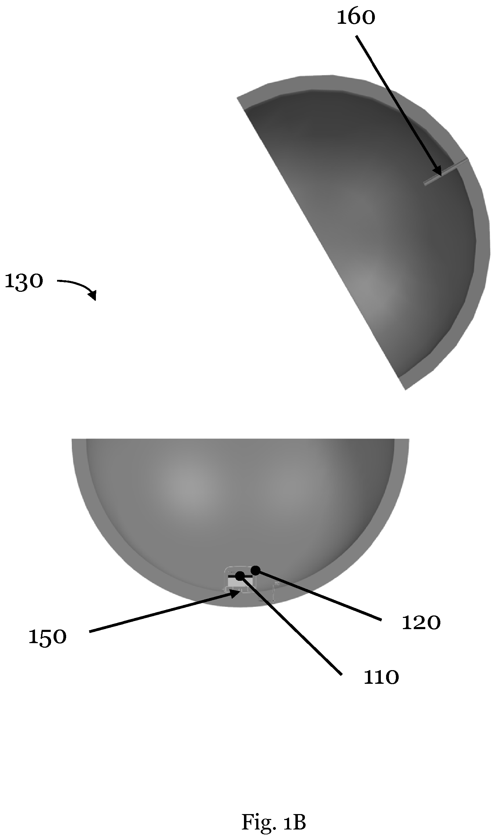

Figure 1B: shows an embodiment of a mold with an electronic component and protection element.

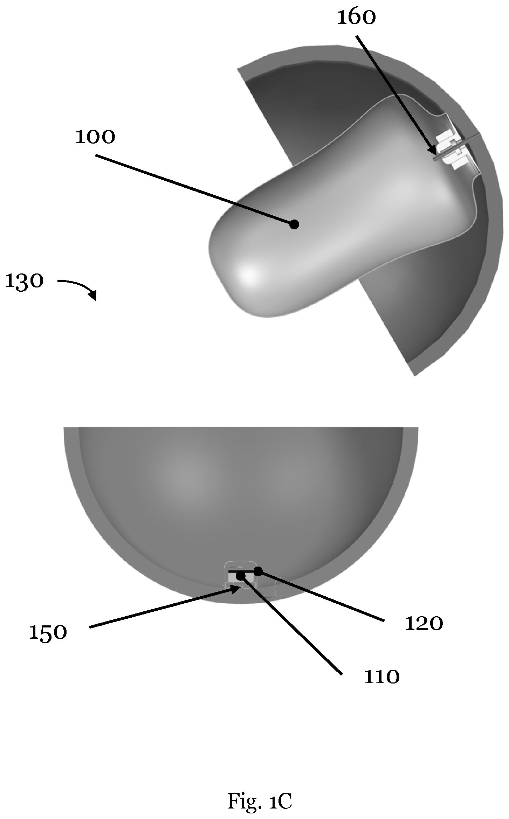

Figure 1C: shows an embodiment of a bladder being formed in a mold with an electronic module and protection element.

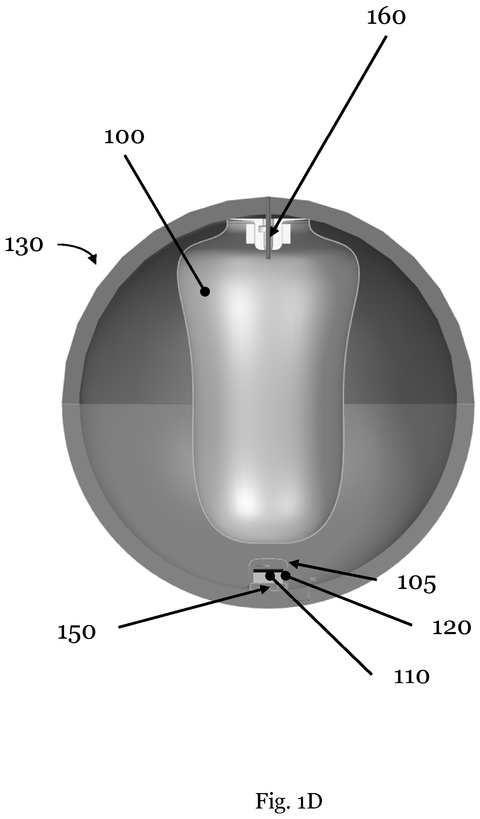

Figure 1D: shows an embodiment of a bladder with an electronic module and protection element within a mold.

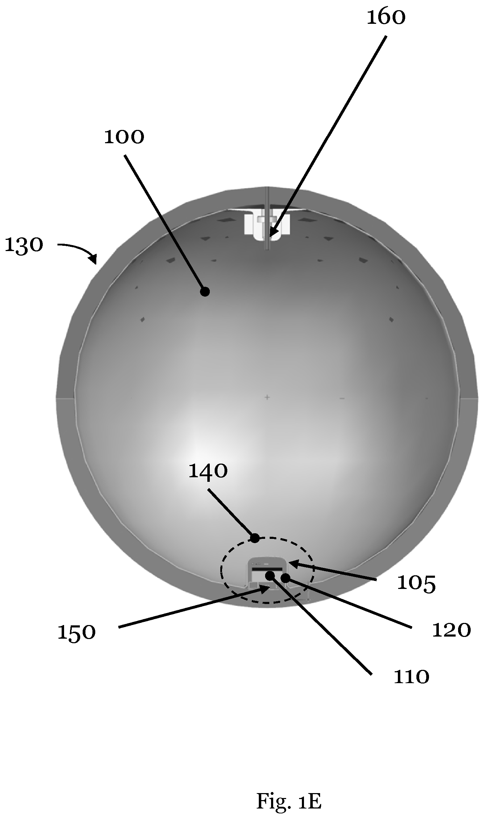

Figure 1E: shows an embodiment of a bladder with an electronic module and a protection element.

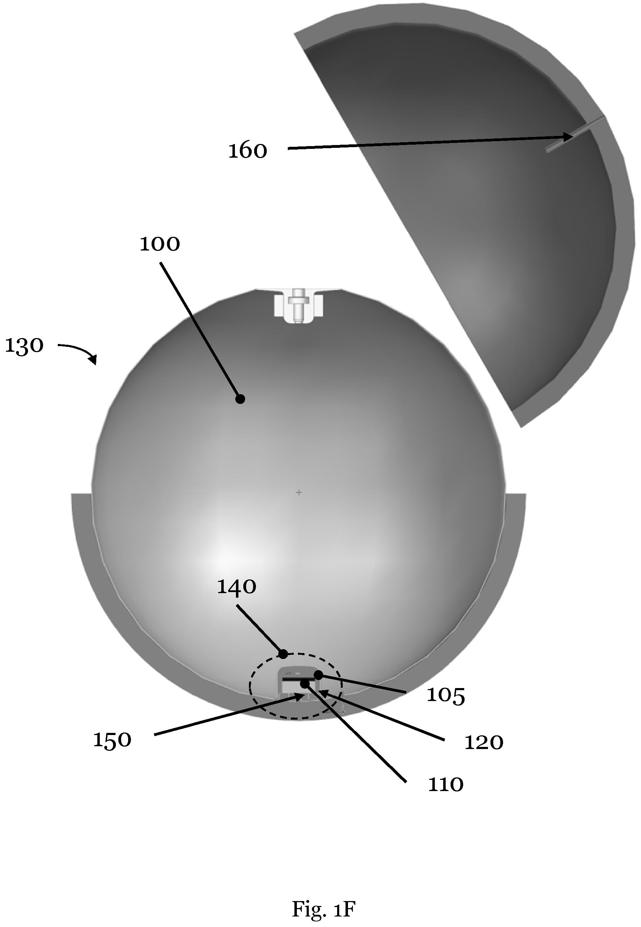

Figure 1F: shows an embodiment of a bladder with a bladder and an electronic module.

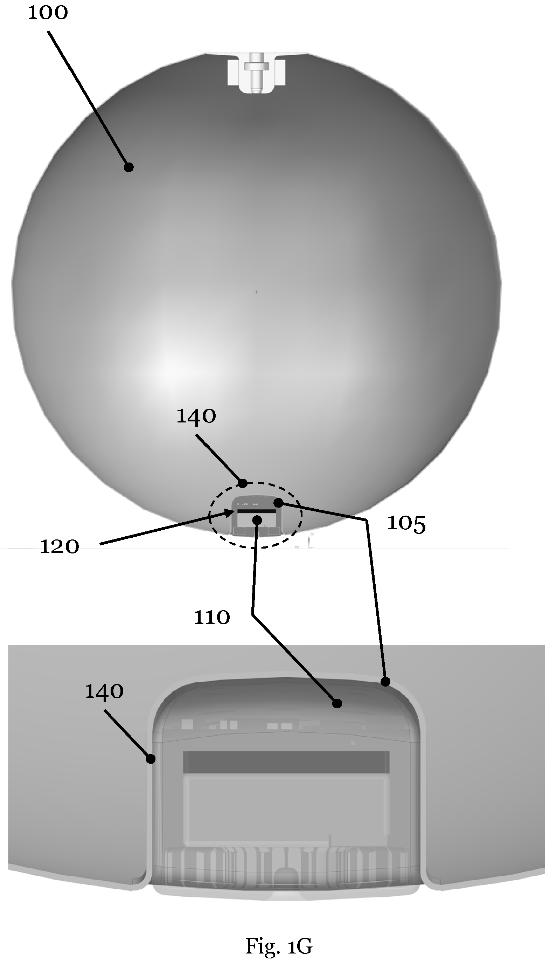

Figure 1G: shows an embodiment of a bladder with an electronic module and a protection element.

### 5. Detailed description of possible embodiments

Possible embodiments of the different aspects of the present invention are described in the following detailed description primarily with respect to tools and methods for the manufacture of a bladder for a ball, in particular a sports ball, having an electronic module with a protection element. It is emphasized, however, that the present invention is not limited to these embodiments. Rather, it may also be used for different kinds of sports equipment.

Reference is further made to the fact that in the following only individual embodiments of the invention can be described in more detail. The skilled person will understand, however, that the optional features and possible modifications described with reference to these specific embodiments may also be further modified and/or combined with one another in a different manner or in different subcombinations, without departing from the scope of the present invention. Individual features may also be omitted, if they are dispensable to obtain the desired result. In order to avoid redundancies, reference is therefore made to the explanations in the preceding sections, which also apply to the following detailed description.

Figures 1A-G present schematic illustrations of embodiments of the present invention for manufacturing process of a bladder 100 for a ball. In particular, the embodiments illustrate possible movements of a mold 130 until the bladder 100 is manufactured having an electronic module 110 with a protection element 120.

Figure 1A illustrates a sectional view of the mold 130 used in the manufacturing process of a bladder for a ball, specifically highlighting the components involved in the formation of the bladder. The mold 130 is depicted in a disassembled state, comprising two hemispherical mold halves. These mold halves are designed to enclose an unformed bladder during the manufacturing process, facilitating the formation of the bladder into its desired shape.

The mold 130 is designed to accommodate various stages of the bladder formation process. Initially, an unformed bladder, which may be a deflated bladder, a bladder preform, or raw bladder material, is inserted into the mold 130. The mold halves are then closed to encapsulate the bladder material. During the subsequent molding process, heat and/or pressure are applied to shape the bladder material against the inner surfaces of the mold halves, simultaneously forming a pocket around the electronic module. This pocket is tailored to conform to the shape of the electronic module, ensuring a secure fit and optimal protection.

Figure 1B illustrates in the sectional view of Figure 1A how the electronic component 110 is provided in the lower half of the mold 130, which is positioned on the inner wall of the mold 130.

The electronic module 110 is secured within the mold 130 by a means for mounting, denoted by numeral 150. This means for mounting 150 holds the electronic module 110 in place during the molding process. The means for mounting 150 is strategically positioned to ensure that the electronic module 110 is embedded within the bladder wall once the molding process is complete.

The electronic module 110 has a protection element 120 which shields the electronic module 110 from the heat and outward-directed forces applied during the bladder formation.

The protection element 120 is shown to be integrated with the electronic component 110, ensuring that the component is adequately protected during the molding process.

The design of the mold 130, including a gas injection means 160, is crucial for maintaining the integrity of an electronic module 110 throughout the manufacturing process. The protection element 120 of the electronic module 110 may be constructed from materials capable of withstanding the thermal and mechanical stresses encountered during bladder formation. These materials may include polycarbonate/Acrylonitrile Butadiene Styrene, PC/ABS, polycarbonate, PC, polyphenylene sulfide, PPS, polyethylene terephthalate, PET, polyamide, PA, or polyamide-imide, PAI.

Adjacent to the electronic component 110, the means for mounting 150 is illustrated. This mounting means 150, potentially a pin or similar fixture, is used to hold the electronic component 110 in place within the mold 130. The means for mounting 150 interlocks with a socket in the protection element 120, ensuring that the electronic component 110 remains securely positioned during the molding process.

The upper half of the mold 130 features the mentioned gas injection means 160, which is likely a valve or similar device. This gas injection means 160 is used to inject gas into the unformed bladder, facilitating the expansion and formation of the bladder against the inner walls of the mold 130 and around the protection element 120. The gas injection means 160 is strategically positioned to ensure uniform distribution of gas, promoting even formation of the bladder.

Figure 1C illustrates in the sectional views of Figures 1A and 1B how the bladder 100 is inserted within the mold 130. This bladder is unformed and is intended to be shaped during the manufacturing process. The mold 130 is designed to accommodate the bladder 100, ensuring that it can be formed to the desired shape. The gas injection means 160 is depicted as being positioned at one end of the bladder 100.

The lower section of the figure provides a more detailed view of the electronic module's placement within the mold 130. The electronic module 110 is shown to be housed within the protection element 120. As mentioned, this protection element 120 is designed to shield the electronic module from the heat and forces applied during the bladder forming process. The protection element 120 is likely made from a material capable of withstanding the manufacturing conditions, ensuring the integrity of the electronic module 110.

The figure also shows the means for mounting 150, which is intended to accommodate the electronic module 110 and its protection element 120. This means for mounting 150 is crucial for securing the electronic module in place during the manufacturing process, ensuring that it remains correctly positioned within the bladder.

Overall, Figure 1C provides a detailed view of the mold assembly and the integration of the electronic module within the bladder. The arrangement of the bladder 100, mold 130, electronic module 160, protection element 120, and means for mounting 150 are all critical for the successful manufacturing of a ball with integrated electronic features. The figure highlights the importance of precise positioning and protection of the electronic module to ensure its functionality and durability within the final product.

Figure 1D illustrates in the sectional views of Figures 1A-1C how the mold is closed.

The bladder 100 is connected to the gas injection means 160, which is used for inflating or deflating the bladder 100. The gas injection means 160 is positioned at the dee of the bladder 100, adjacent to the electronic module 110. This configuration allows for easy access to the gas injection means 160 for inflation purposes while maintaining the integrity and functionality of the electronic module 110.

Figure 1E illustrates how the bladder 100 is inflated such that the bladder 100 is formed onto the inner wall of the mold 130 and simultaneously onto the protection element 120 such that a bladder wall 105 is adapted to form a pocket 140 around the electronic component 120.

The bladder 100 forms the primary structure of the ball. It is depicted as a spherical entity, which is typical for sports balls, providing the necessary shape and volume.

Within the bladder, the electronic module 110. This module is positioned within a pocket 140 as indicated by a dashed circle, which is formed as part of the bladder structure. The pocket 140 is designed to securely house the electronic module, ensuring that it remains fixed in position even when the bladder is deflated.

The pocket 140 is strategically located to minimize interference with the ball's performance while providing adequate protection for the electronic module.

The electronic module 110 is further protected by the protection element 120. As mentioned, the protection element 120 is crucial for safeguarding the electronic module from potential damage due to heat and outward-directed forces encountered during the bladder's manufacturing process. The protection element 120 is likely composed of materials capable of withstanding such conditions, ensuring the electronic module's integrity and functionality.

Overall, Figure 1E provides a detailed depiction of the integration of the electronic module 120 within the sports ball's bladder 100. The arrangement ensures that the module is protected and securely housed, allowing the ball to maintain its intended functionality and performance characteristics. The use of the protection element 120 and the strategically designed pocket 140 highlights the careful consideration given to the module's placement and protection within the ball's structure.

Figure 1F illustrates how the mold 130 is opened after forming the bladder 100.

The electronic module 110 is positioned within the pocket 140 formed in the bladder 100. This pocket 140 is designed to securely house the electronic module 110, ensuring it remains fixed in position even when the bladder is deflated.

The protection element 120 is strategically positioned to provide optimal protection to the electronic module 110. The pocket 140 is shaped to conform to the dimensions of the electronic module 110, ensuring a snug fit that prevents movement and potential damage. The protection element 120 may be constructed from materials such as polycarbonate, polyamide, or other thermoplastic polymers known for their durability and heat resistance.

Figure 1G illustrates the formed bladder 100 with the electronic component 110 and the protection element 120 in the pocket 140.

This pocket is formed on the inner side of the bladder 100, ensuring that the electronic module 110 is securely positioned. The pocket 140 is designed to conform to the shape of the electronic module 110, providing a snug fit that helps in maintaining the module's position even when the ball is in a deflated state. This design is crucial for preventing movement of the electronic module during the ball's use, which could otherwise lead to damage or malfunction.

In the following, further preferred embodiments are described to facilitate understanding:
Embodiment 1. A method for manufacturing a bladder for a ball, in particular a sports ball, comprising an electronic module with a protection element, wherein the method comprises the steps of:
   (a.) providing the electronic component on an inner wall of a mold;
   (b.) inserting an unformed bladder into the mold; and
   (c.) forming the bladder onto the inner wall of the mold and simultaneously onto the protection element such that a bladder wall is adapted to form a pocket around the electronic component.
Embodiment 2. The method according to the preceding embodiment, wherein the electronic component is arranged after step (c.) on an outer side of the bladder wall and fixed inside the pocket.
Embodiment 3. The method according to one of the preceding embodiments, wherein a shape of the pocket is adapted to follow a shape of the electronic component after step (c.).
Embodiment 4. The method according to one of the preceding embodiments, wherein step (c.) is performed by using heat and/or an outward-directed force, and wherein the protection element is adapted to protect the electronic module from the heat and/or the outward-directed force used in step (c.).
Embodiment 5. The method according to the preceding embodiment, wherein the protection element is a casing of the electronic component adapted to withstanding the heat and/or the outward-directed force used in step (c.).
Embodiment 6. The method according to one of the preceding embodiments, wherein the electronic component is removably attached in step (a.).
Embodiment 7. The method according to one of the preceding embodiments, wherein the electronic component is provided by a means for mounting, preferably a pin, of the mold.
Embodiment 8. The method according to one of the preceding embodiments, wherein the unformed bladder comprises a deflated bladder, a bladder preform or a raw bladder material.
Embodiment 9. The method according to the preceding embodiment, wherein the deflated bladder is used, and wherein step (c.) comprises the step of injecting gas into the deflated bladder and applying heat to the deflated bladder.
Embodiment 10. The method according to the preceding embodiment, wherein the deflated bladder is attached to a gas injection means, preferably a valve.
Embodiment 11. The method according to one of embodiments 9 or 10, wherein the deflated bladder comprises elastomers, preferably rubber, more preferably butyl rubber.
Embodiment 12. The method according to embodiment 8, wherein the bladder preform or the raw bladder material are used, and step (c.) comprises a blow molding process for forming the bladder.
Embodiment 13. The method according to the preceding embodiment, wherein the bladder preform is used, and wherein step (c.) comprises an injection blow molding process for forming the bladder.
Embodiment 14. The method according to the preceding embodiment, wherein the bladder preform is preheated.
Embodiment 15. The method according to embodiment 12, wherein the raw bladder material is used, and wherein step (c.) comprises an extrusion blow molding process for forming the bladder.
Embodiment 16. The method according to the preceding embodiment, wherein the inserted raw bladder material is a parison extruded before forming the parison by utilizing a pressure of an injected gas.
Embodiment 17. The method according to one of embodiments 12 to 16, wherein the bladder preform or the raw bladder material comprise a thermoplastic polymer, preferably a thermoplastic elastomer.
Embodiment 18. The method according to one of the embodiments 8 to 17, wherein a temperature in the range of 80°C to 220°C, preferably 120°C to 200°C, more preferably 140°C to 180°C is applied.
Embodiment 19. The method according to one of embodiments 1 to 7, wherein step (c.) comprises a rotational molding process.
Embodiment 20. The method according to the preceding embodiment, wherein a softened material or a powder material is inserted in step (b.) and wherein the mold rotates around at least two axes during step (c.).
Embodiment 21. The method according to embodiment 18 or 19, wherein the unformed bladder comprises a thermoplastic polymer, preferably a thermoplastic elastomer.
Embodiment 22. The method according to one of the preceding embodiments, wherein the protection element comprises at least one of the following: rubber, polycarbonate/Acrylonitrile Butadiene Styrene, PC/ABS, polycarbonate, PC, polyphenylene sulfide, PPS, polyethylene terephthalate, PET, polyamide, PA, thermoplastic polyurethane, TPU, or polyamide-imide, PAI.
Embodiment 23. The method according to embodiment 7, wherein the means for mounting, preferably the pin, is adapted to hold the electronic module in place in that the means for mounting interlocks with a socket in the protection element.
Embodiment 24. The method according to one of embodiments 19 to 22, wherein a temperature in the range of 140°C to 260°C, preferably 160°C to 240°C , more preferably 180°C to 220°C is applied.
Embodiment 25. The method according to one of embodiments 4 to 24, wherein step (c.) is performed by using heat, wherein the protection element is adapted to protect the electronic module from the heat in step (c.), such that a temperature of a battery of the electronic module does not exceed 100°C, preferably 90°C, more preferably 80°C.
Embodiment 26. The method according to one of the preceding embodiments, further comprising the steps of
   closing the mold prior to step (c.);
   opening the mold after step (c.); and
   removing the formed bladder.
Embodiment 27. A method for manufacturing a ball, in particular a sports ball, comprising the step of assembling the formed bladder manufactured according to one of the preceding embodiments into an outer shell of a ball while the formed bladder is again in a deflated state.
Embodiment 28. A ball, in particular a sports ball, comprising a bladder with an electronic module having a protection element, wherein the protection element is adapted to protect the electronic module from heat and/or an outward-directed force used during forming the bladder.
Embodiment 29. The ball according to the preceding embodiment, wherein the electronic module is arranged in a pocket of the bladder and the pocket is adapted to fix the electronic module.
Embodiment 30. The ball according to the preceding embodiment, wherein the pocket extends inward of the bladder and is adapted to provide sufficient pressure onto lateral surfaces of the protection element to fix the protection element even when the bladder is deflated.
Embodiment 31. The ball according to one of embodiments 26 to 28, wherein the bladder comprises butyl rubber and/or a thermoplastic polymer, preferably a thermoplastic elastomer.
Embodiment 32. The ball according to one of embodiments 26 to 29, wherein the protection element comprises at least one of the following: polycarbonate/Acrylonitrile Butadiene Styrene, PC/ABS, polycarbonate, PC, polyphenylene sulfide, PPS, polyethylene terephthalate, PET, polyamide, PA, or polyamide-imide, PAI.

## Claims

1. A method for manufacturing a bladder for a ball, in particular a sports ball, comprising an electronic module with a protection element, wherein the method comprises the steps of:
(a.) providing the electronic component on an inner wall of a mold;
(b.) inserting an unformed bladder into the mold; and
(c.) forming the bladder onto the inner wall of the mold and simultaneously onto the protection element such that a bladder wall is adapted to form a pocket around the electronic component, wherein preferably the electronic component is arranged after step (c.) on an outer side of the bladder wall and fixed inside the pocket.

2. The method according to one of the preceding claims, wherein a shape of the pocket is adapted to follow a shape of the electronic component after step (c.).

3. The method according to one of the preceding claims, wherein step (c.) is performed by using heat and/or an outward-directed force, and wherein the protection element is adapted to protect the electronic module from the heat and/or the outward-directed force used in step (c.), wherein preferably the protection element is a casing of the electronic component adapted to withstanding the heat and/or the outward-directed force used in step (c.).

4. The method according to one of the preceding claims, wherein the electronic component is removably attached in step (a.).

5. The method according to one of the preceding claims, wherein the electronic component is provided by a means for mounting, preferably a pin, of the mold.

6. The method according to one of the preceding claims, wherein the unformed bladder comprises a deflated bladder, a bladder preform or a raw bladder material, wherein preferably the deflated bladder is used, and wherein step (c.) comprises the step of injecting gas into the deflated bladder and applying heat to the deflated bladder and/or wherein the deflated bladder is attached to a gas injection means, preferably a valve and/or wherein the deflated bladder comprises elastomers, preferably rubber, more preferably butyl rubber.

7. The method according to claim 6, wherein the bladder preform or the raw bladder material are used, and step (c.) comprises a blow molding process for forming the bladder, wherein preferably the bladder preform is used, and wherein step (c.) comprises an injection blow molding process for forming the bladder, and/or wherein the bladder preform is preheated.

8. The method according to claim 7, wherein the raw bladder material is used, and wherein step (c.) comprises an extrusion blow molding process for forming the bladder, wherein preferably the inserted raw bladder material is a parison extruded before forming the parison by utilizing a pressure of an injected gas.

9. The method according to one of claims 1 to 5, wherein step (c.) comprises a rotational molding process, wherein preferably a softened material or a powder material is inserted in step (b.) and wherein the mold rotates around at least two axes during step (c.).

10. The method according to claim 9, wherein the unformed bladder comprises a thermoplastic polymer, preferably a thermoplastic elastomer.

11. The method according to claim 5, wherein the means for mounting, preferably the pin, is adapted to hold the electronic module in place in that the means for mounting interlocks with a socket in the protection element.

12. The method according to one of claims 3 to 11, wherein step (c.) is performed by using heat, wherein the protection element is adapted to protect the electronic module from the heat in step (c.), such that a temperature of a battery of the electronic module does not exceed 100°C, preferably 90°C, more preferably 80°C.

13. The method according to one of the preceding claims, further comprising the steps of
closing the mold prior to step (c.);
opening the mold after step (c.); and
removing the formed bladder.

14. A method for manufacturing a ball, in particular a sports ball, comprising the step of assembling the formed bladder manufactured according to one of the preceding claims into an outer shell of a ball while the formed bladder is again in a deflated state.

15. A ball, in particular a sports ball, comprising a bladder with an electronic module having a protection element, wherein the protection element is adapted to protect the electronic module from heat and/or an outward-directed force used during forming the bladder, wherein preferably the electronic module is arranged in a pocket of the bladder and the pocket is adapted to fix the electronic module, and/or wherein the pocket extends inward of the bladder and is adapted to provide sufficient pressure onto lateral surfaces of the protection element to fix the protection element even when the bladder is deflated.
